# EUROPEAN PATENT APPLICATION

(11) **EP 4 815 362 A1**
(43) Date of publication of application: **30.09.2026**
(21) Application number: 24893799.7
(22) Date of filing: 23.07.2024
(51) Int. Cl.: H04L 9/08

(54) **COMMUNICATION METHOD, COMMUNICATION SYSTEM, SERVER, AND COMMUNICATION APPARATUS**

(30) Priority: 24.11.2023 JP 2023199158
(71) Applicant: Panasonic Intellectual Property Management Co., Ltd., Kadoma-shi, Osaka 571-0057 (JP)
(72) Inventor: NISHIDA, Naohisa, Kadoma-shi, Osaka 571-0057 (JP)
(74) Representative: Grünecker Patent- und Rechtsanwälte PartG mbB
(86) International application number: PCT/JP2024/026368
(87) International publication number: WO 2025/109804

(57) **Abstract**

A communication method includes: generating a key (first key) including a private key and a public key using a random seed stored in advance (S202); creating, using the key generated, a digital certificate for the key (S203); and transmitting the digital certificate created to a connected device (200), the connected device (200) storing in advance a random seed identical to the random seed and generating, using the random seed stored in the connected device (200), a key (second key) identical to the key generated (S204).

## Description

### [Technical Field]

The present disclosure relates to a communication method, a communication system, a server, and a connected device.

### [Background Art]

Patent Literature (PTL) 1 discloses an information processing device or a signature generating device for realizing a public key authentication scheme or a digital signature scheme using a system of higher-degree multivariate equations for which no efficient solving means (trapdoor) has been known.

### [Citation List]

### [Patent Literature]

[PTL 1] Japanese Unexamined Patent Application Publication No. 2013-48350

### [Summary of Invention]

### [Technical Problem]

The present disclosure provides a communication method, etc. capable of creating or updating a digital certificate without transmitting a private key.

### [Solution to Problem]

A communication method according to one aspect of the present disclosure includes: generating a key including a private key and a public key using a random seed stored in advance; creating, using the key generated, a digital certificate for the key; and transmitting the digital certificate created to a connected device, the connected device storing in advance a random seed identical to the random seed and generating, using the random seed stored in the connected device, a key identical to the key generated.

Furthermore, a communication system according to one aspect of the present disclosure includes: a server; and a connected device that communicates with the server. The server includes: a key generator that generates a key including a private key and a public key using a random seed stored in advance; a certificate creator that creates, using the key generated by the key generator, a digital certificate for the key; and a communicator that transmits the digital certificate created by the certificate creator to the connected device. The connected device includes: a communicator that receives the digital certificate transmitted from the server; and a key generator that generates, using a random seed identical to the random seed stored in advance, a key identical to the key generated by the key generator of the server.

A server according to one aspect of the present disclosure includes: a key generator, a certificate creator, and a communicator. The key generator generates a key including a private key and a public key using a random seed stored in advance. The certificate creator creates, using the key generated by the key generator, a digital certificate for the key. The communicator transmits the digital certificate created by the certificate creator to a connected device, the connected device storing in advance a random seed identical to the random seed and generating, using the random seed stored in the connected device, a key identical to the key generated by the key generator.

Furthermore, a connected device according to one aspect of the present disclosure is a connected device that communicates with a server and includes a key generator and a communicator. The key generator generates a key identical to a key including a private key and a public key generated by the server by using a random seed identical to a random seed stored in advance and to be used by the server. The communicator receives a digital certificate for the key generated by the server, the digital certificate being created by the server using the key generated by the server and being transmitted from the server.

### [Advantageous Effects of Invention]

The present disclosure provides an advantage of enabling creation or update of a digital certificate without transmitting a private key.

### [Brief Description of Drawings]

[FIG. 1]

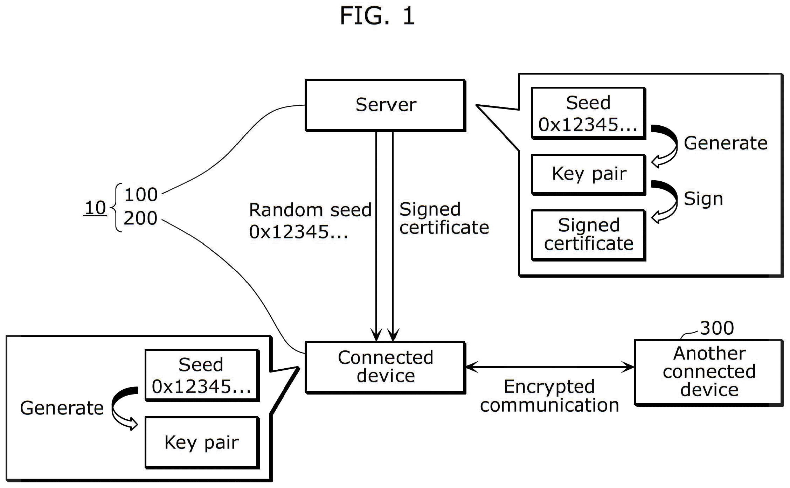

   FIG. 1 is a block diagram illustrating an example of an overall configuration including a communication system according to an embodiment.
[FIG. 2]

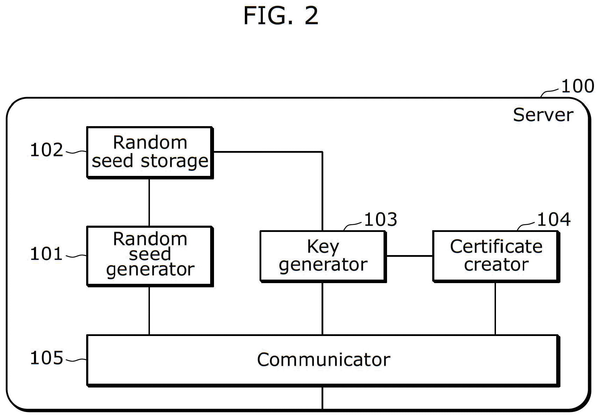

   FIG. 2 is a block diagram illustrating an example of a functional configuration of a server according to the embodiment.
[FIG. 3]

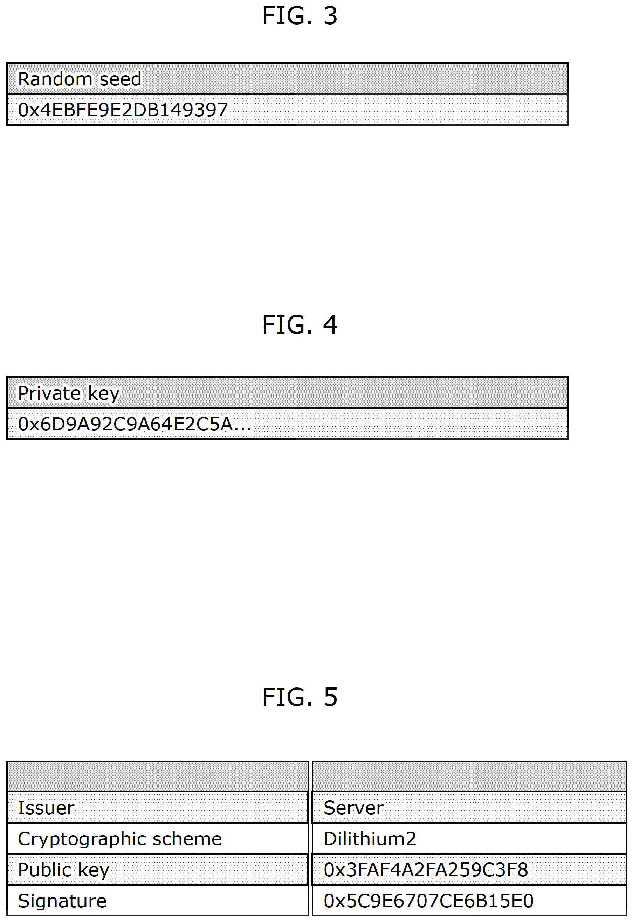

   FIG. 3 is a diagram illustrating an example of a random seed.
[FIG. 4]
   FIG. 4 is a diagram illustrating an example of a private key.
[FIG. 5]
   FIG. 5 is a diagram illustrating an example of a digital certificate.
[FIG. 6]

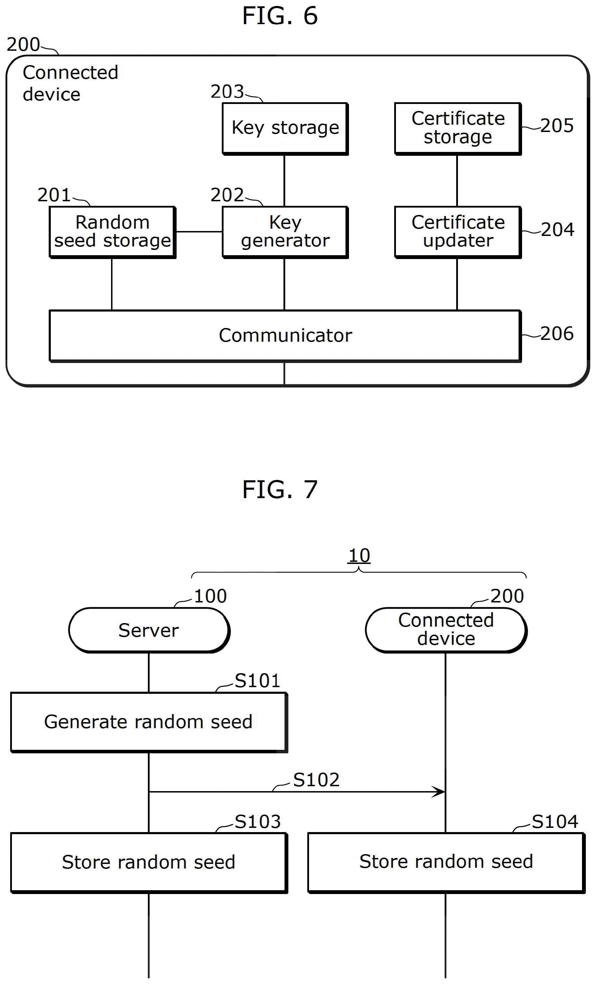

   FIG. 6 is a block diagram illustrating an example of a functional configuration of a connected device according to the embodiment.
[FIG. 7]
   FIG. 7 is a sequence diagram illustrating a first operation example of the communication system according to the embodiment.
[FIG. 8]

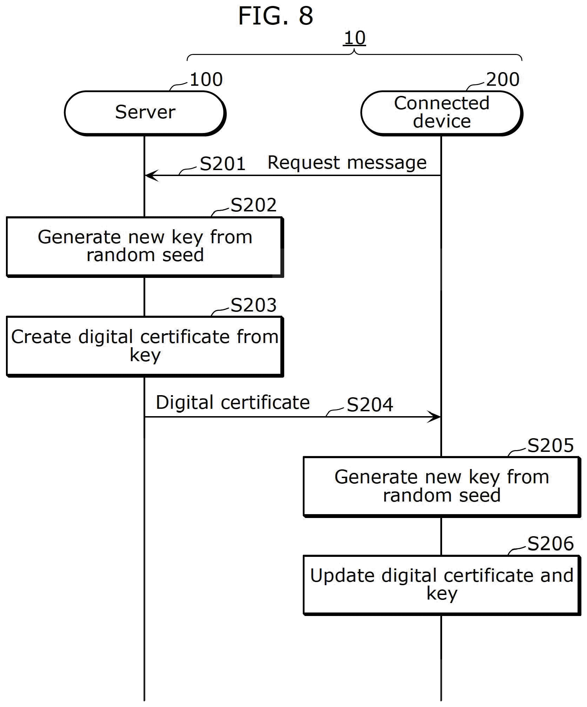

   FIG. 8 is a sequence diagram illustrating a second operation example of the communication system according to the embodiment.
[FIG. 9]

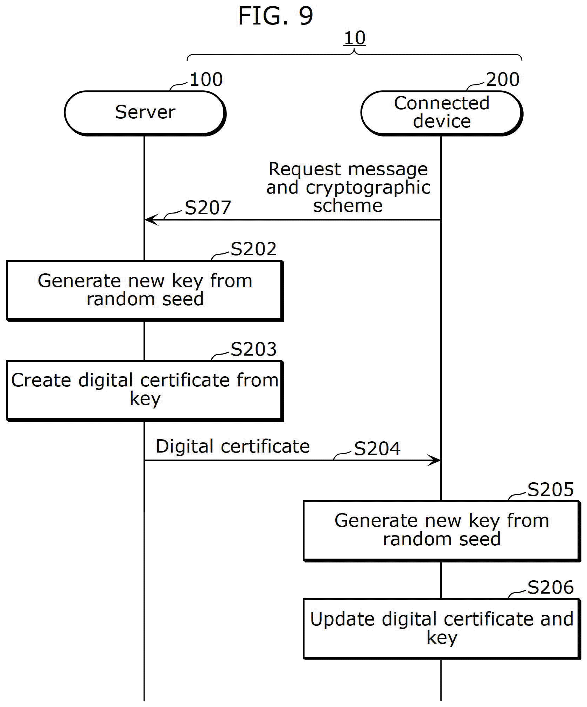

   FIG. 9 is a sequence diagram illustrating an operation example of a communication system according to Variation 1 of the embodiment.
[FIG. 10]

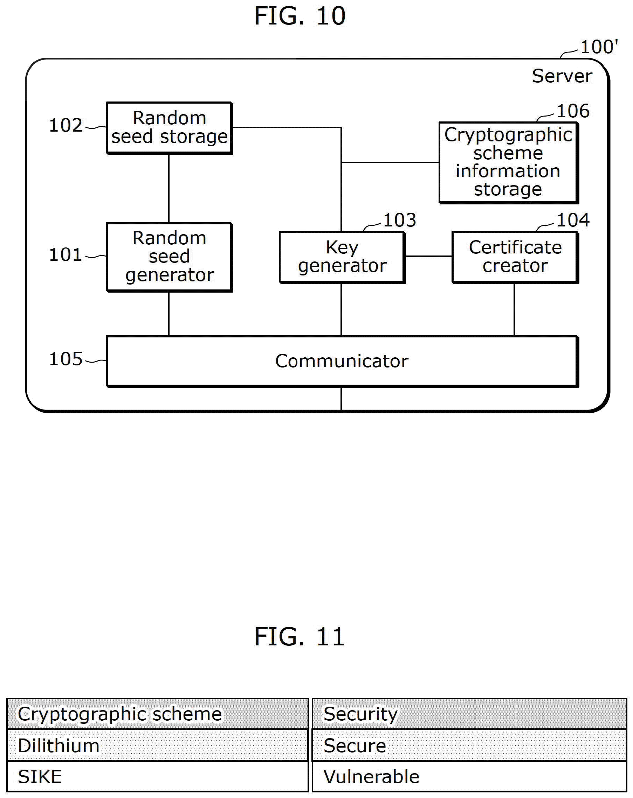

   FIG. 10 is a block diagram illustrating an example of a functional configuration of a server according to Variation 2 of the embodiment.
[FIG. 11]
   FIG. 11 is a diagram illustrating an example of cryptographic scheme information.
[FIG. 12]

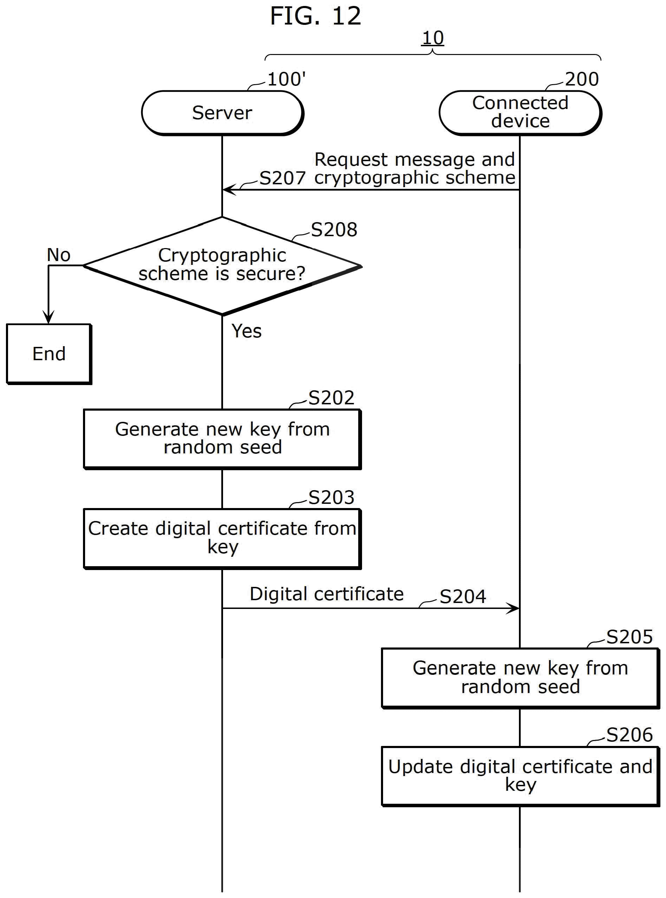

   FIG. 12 is a sequence diagram illustrating an operation example of a communication system according to Variation 2 of the embodiment.
[FIG. 13]

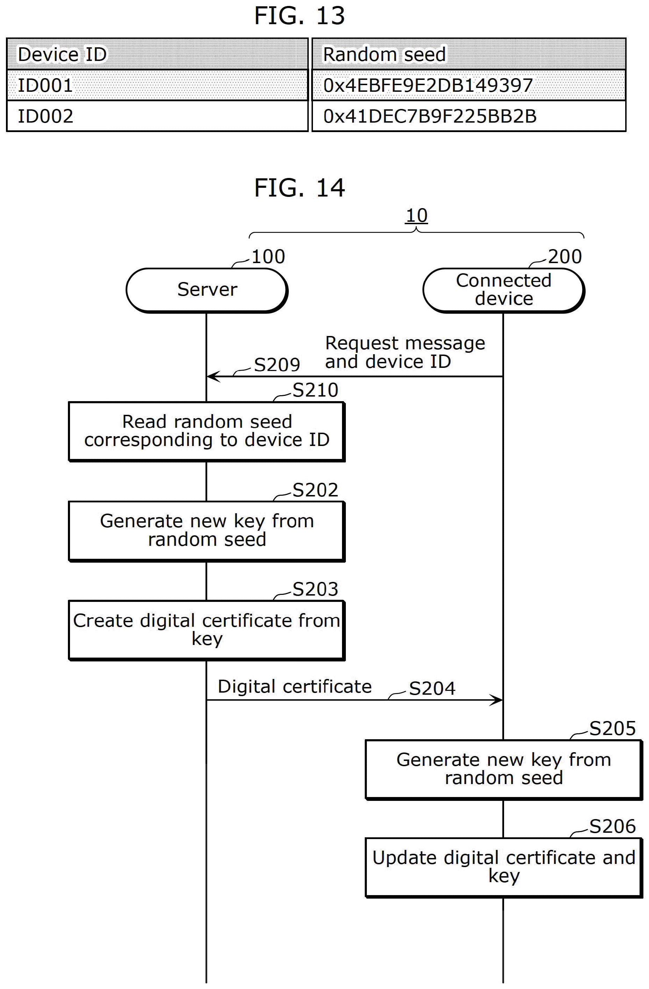

   FIG. 13 is a diagram illustrating an example of a random seed for each device ID.
[FIG. 14]
   FIG. 14 is a sequence diagram illustrating an operation example of a communication system according to Variation 3 of the embodiment.
[FIG. 15]

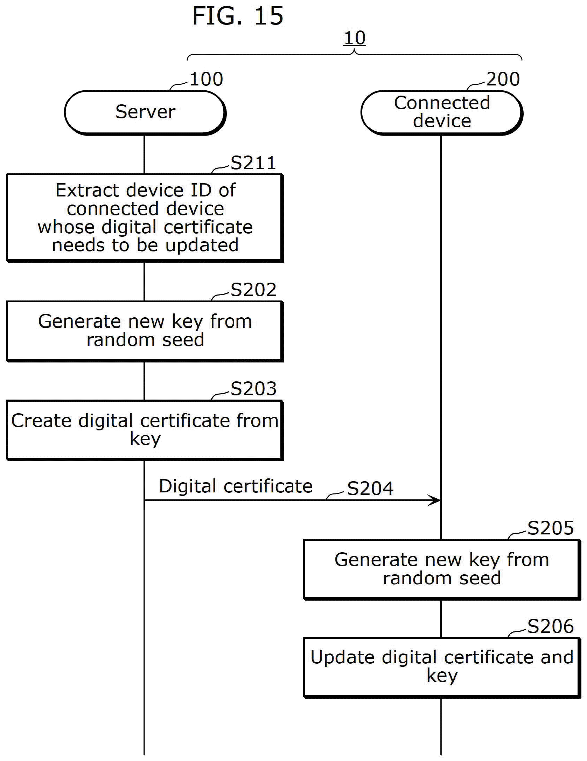

   FIG. 15 is a sequence diagram illustrating an operation example of a communication system according to Variation 4 of the embodiment.
[FIG. 16]

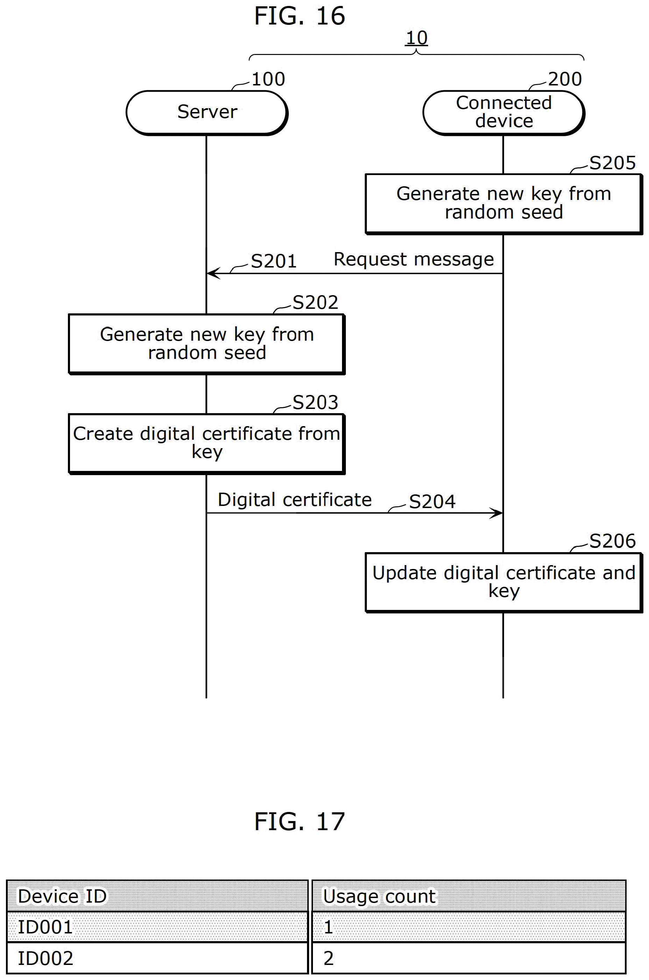

   FIG. 16 is a sequence diagram illustrating an operation example of a communication system according to Variation 5 of the embodiment.
[FIG. 17]
   FIG. 17 is a diagram illustrating an example of a usage count for each device ID.
[FIG. 18]

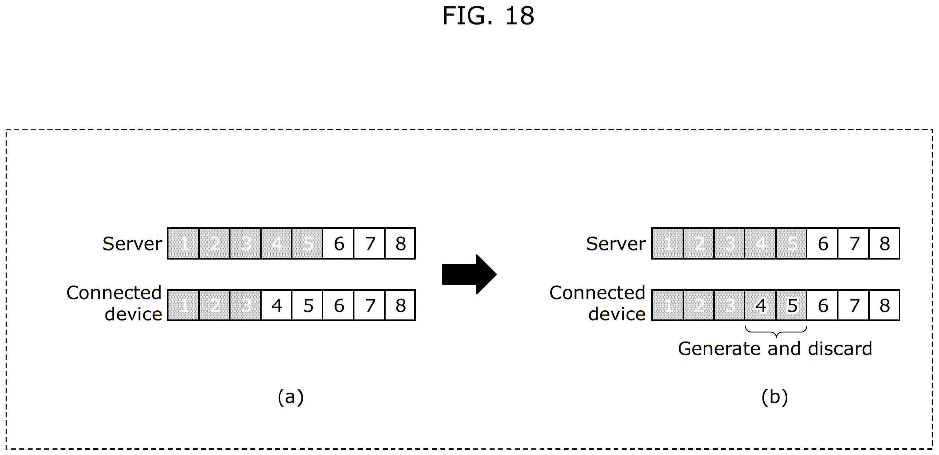

   FIG. 18 is a schematic diagram illustrating operations by a communication system according to Variation 6 of the embodiment.
[FIG. 19]

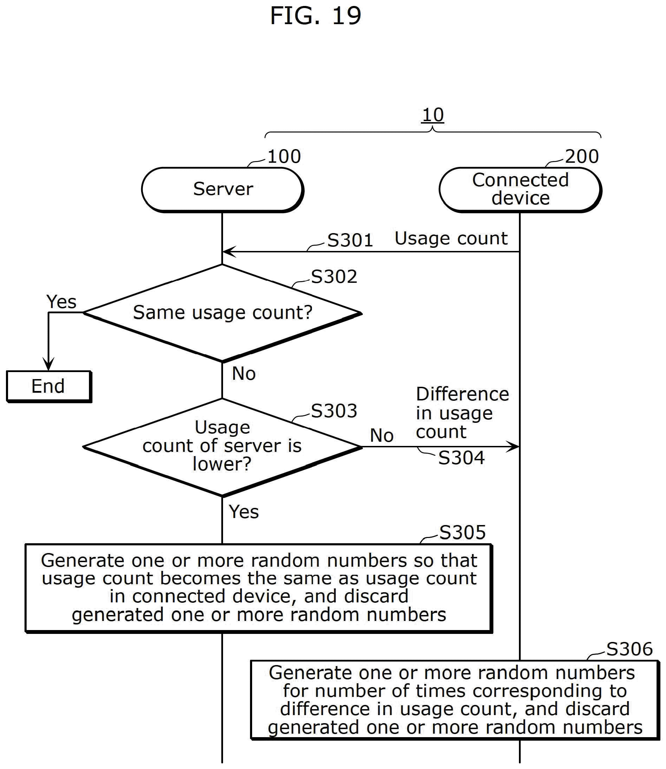

   FIG. 19 is a sequence diagram illustrating an operation example of the communication system according to Variation 6 of the embodiment.
[FIG. 20]

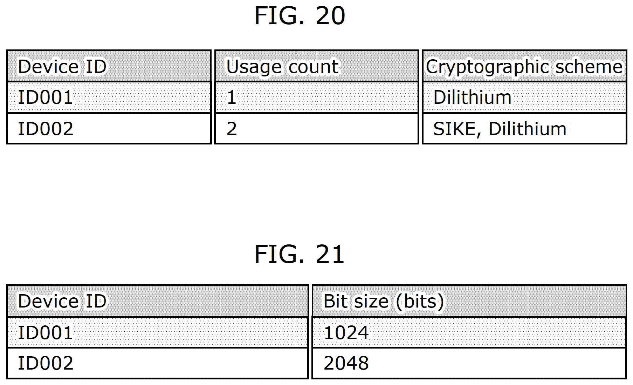

   FIG. 20 is a diagram illustrating an example of a usage count of a random seed and one or more cryptographic schemes for each device ID.
[FIG. 21]
   FIG. 21 is a diagram illustrating an example of a bit size of a random number for each device ID.

### [Description of Embodiments]

### (Underlying Knowledge Forming Basis of the Present Disclosure)

In recent years, with the advent of quantum computers, the development of quantum computers has been actively conducted. With the scaling up of quantum computers, on the other hand, cryptographic schemes currently in use (hereinafter, also referred to as "classical cryptographic schemes") are known to become theoretically compromised. In view of such circumstances, post-quantum cryptographic schemes, which are new cryptographic schemes capable of withstanding the computing performance of large-scale quantum computers, have been proposed.

Even for the post-quantum cryptographic schemes, however, the evaluation of their security is imperfect. Thus, even after a post-quantum cryptographic scheme is adopted in a connected device, a vulnerability may be found in the post-quantum cryptographic scheme. When a vulnerability is found in the cryptographic scheme currently in use, the connected device needs to immediately switch to another cryptographic scheme in order to ensure the security of communication, and the digital certificate currently in use needs to be updated.

Here, when the connected device requests a server to create or update the digital certificate, the connected device needs to transmit a Certificate Signing Request (CSR) to the server (certification authority). A CSR is a message requesting the server to issue a digital certificate for a key pair (a private key and a public key) generated by the connected device and the message is digitally signed using the private key of the sender of the CSR and transmitted to the server.

However, when a vulnerability is found in the cryptographic scheme currently in use, the security of the communication is no longer guaranteed, and therefore there is a problem in that a private key cannot be transmitted to the server via a network.

Furthermore, even when a vulnerability has not been found in the cryptographic scheme currently in use, for example, if a private key is stored in a secure element, the private key cannot be extracted from the connected device to an external destination. Accordingly, in this case as well, there is a problem in that a private key cannot be transmitted to the server via a network.

In view of the above, the present disclosure provides a communication method, etc. capable of creating or updating a digital certificate without transmitting a private key by creating a digital certificate using a random seed stored in advance.

More specifically, a communication method according to a first aspect of the present disclosure includes: generating a key including a private key and a public key using a random seed stored in advance; creating, using the key generated, a digital certificate for the key; and transmitting the digital certificate created to a connected device, the connected device storing in advance a random seed identical to the random seed and generating, using the random seed stored in the connected device, a key identical to the key generated.

With this, a key identical to a key to be generated by the connected device is generated using the random seed identical to the random seed to be used by the connected device, and a digital certificate for the key generated by the connected device is created and transmitted to the connected device. Therefore, the connected device can substantially obtain a digital certificate for the key generated by the connected device. Therefore, this provides an advantage of enabling creation or update of a digital certificate without transmitting a private key.

Furthermore, for example, in a communication method according to a second aspect of the present disclosure, in the generating of the key in the first aspect, the key is generated further based on a cryptographic scheme usable by the connected device.

With this, a key is generated further based on the cryptographic scheme usable by the connected device and consequently a digital certificate is created. Therefore, this provides an advantage that a digital certificate corresponding to the cryptographic scheme usable by the connected device can be created or updated.

Furthermore, for example, a communication method according to a third aspect of the present disclosure, the cryptographic scheme in the second aspect is a post-quantum cryptographic scheme.

With this, deciphering of a key is more difficult compared with the case where encrypted communication is performed using classical cryptographic schemes. Therefore, this provides the advantage of easy assurance of the confidentiality of data to be transmitted or received using a key.

Furthermore, for example, a communication method according to a fourth aspect of the present disclosure includes, in the second or third aspect: determining whether the cryptographic scheme is secure or vulnerable, in which in the generating of the key, the key is generated when the cryptographic scheme is determined to be secure.

With this, when the cryptographic scheme is secure, a key is generated and consequently a digital certificate is created. Therefore, this provides the advantage of preventing creation of a digital certificate for the cryptographic scheme in which a vulnerability has been found.

Furthermore, for example, a communication method according to a fifth aspect of the present disclosure further includes, in any one of the first to fourth aspects: obtaining an identifier of the connected device, in which in the generating of the key, the key is generated using the random seed corresponding to the identifier obtained.

With this, a key is generated using a random seed corresponding to the identifier of the connected device and consequently a digital certificate is created. Therefore, this provides the advantage of enabling creation of a unique digital certificate corresponding to each of connected devices.

Furthermore, for example, a communication method according to a sixth aspect of the present disclosure includes, in any one of the first to fifth aspects: determining whether the digital certificate needs to be updated, in which in the generating of the key, the key is generated when the digital certificate is determined to require updating.

With this, whether a digital certificate needs to be updated is determined, and when the digital certificate is determined to require updating, a key is generated and consequently a digital certificate is created. Therefore, this provides the advantage of eliminating the need for the connected device to request an update of the digital certificate.

Furthermore, for example, a communication method according to a seventh aspect of the present disclosure includes, in any one of the first to sixth aspects: obtaining a usage count of the random seed in the connected device; and matching a usage count of the random seed used in the generating of the key with the usage count of the random seed in the connected device that has been obtained.

With this, the usage count of the random seed is made to match the usage count of the random seed in the connected device, and thus a random number generated using the random seed becomes identical to a random number generated by the connected device using the random seed. Therefore, with this, the generated key always becomes identical to the key generated by the connected device, and therefore this provides the advantage of reducing the likelihood that a created digital certificate becomes invalid.

Furthermore, for example, a communication system according to an eighth aspect of the present disclosure includes: a server; and a connected device that communicates with the server. The server includes: a key generator; a certificate creator; and a communicator. The key generator generates a key including a private key and a public key using a random seed stored in advance. The certificate creator creates, using the key generated by the key generator, a digital certificate for the key. The communicator transmits the digital certificate created by the certificate creator to the connected device. The connected device includes: a communicator; and a key generator. The communicator receives the digital certificate transmitted from the server. The key generator generates, using a random seed identical to the random seed stored in advance, a key identical to the key generated by the key generator of the server.

This provides the advantage of achieving the same effects as those of the communication method described above.

Furthermore, for example, a server according to a ninth aspect of the present disclosure includes: a key generator, a certificate creator, and a communicator. The key generator generates a key including a private key and a public key using a random seed stored in advance. The certificate creator creates, using the key generated by the key generator, a digital certificate for the key. The communicator transmits the digital certificate created by the certificate creator to a connected device, the connected device storing in advance a random seed identical to the random seed and generating, using the random seed stored in the connected device, a key identical to the key generated by the key generator.

This provides the advantage of achieving the same effects as those of the communication method described above.

Furthermore, for example, a connected device according to a tenth aspect of the present disclosure is a connected device that communicates with a server and includes a key generator and a communicator. The key generator generates a key identical to a key including a private key and a public key generated by the server by using a random seed identical to a random seed stored in advance and to be used by the server. The communicator receives a digital certificate for the key generated by the server, the digital certificate being created by the server using the key generated by the server and being transmitted from the server.

This provides the advantage of achieving the same effects as those of the communication method described above.

Furthermore, these general or specific aspects may be implemented using a system, a device, a method, an integrated circuit, a computer program, or a non-transitory computer-readable recording medium such as a Compact Disc Read-Only Memory (CD-ROM), or any combination of systems, devices, methods, integrated circuits, computer programs, and recording media.

Hereinafter, one or more embodiments are described in greater detail with reference to the accompanying Drawings. Note that each of the one or more embodiments described below shows a general or specific example. The numerical values, shapes, materials, elements, the arrangement and connection of the elements, steps, the processing order of the steps, etc. shown in the following one or more embodiments are mere examples, and therefore are not intended to limit the scope of the present disclosure. Furthermore, among the elements in the following one or more embodiments, elements not recited in any one of the independent claims are described as optional elements. Note that each diagram is a schematic diagram, and not necessarily a precise illustration. Furthermore, throughout the figures, elements that are essentially the same share like reference signs, and duplicate description may be omitted or simplified.

### [Embodiment]

### [1. Overview]

First, an overview of a communication method according to an embodiment will be described with reference to FIG. 1. FIG. 1 is a block diagram illustrating an example of an overall configuration including communication system 10 according to the embodiment. As illustrated in FIG. 1, communication system 10 includes server 100 and connected device 200. Connected device 200 is a device that performs encrypted communication with another connected device 300 via a network such as the Internet. Note that in the embodiment, communication system 10 includes one connected device 200, but may include a plurality of connected devices 200.

Server 100 is what is called a certification authority, and upon obtaining a message (hereinafter, also referred to as "request message") requesting for creation or update of a digital certificate transmitted from connected device 200, server 100 creates a digital certificate (signed certificate) in accordance with the obtained request message, and transmits the created digital certificate to connected device 200, which is the sender of the request message. Furthermore, server 100 transmits a random seed to connected device 200. In the embodiment, server 100 transmits a random seed to a single connected device 200. However, when there are a plurality of connected devices 200, server 100 may transmit mutually different random seeds to the plurality of connected devices 200.

Here, server 100 transmits a random seed to connected device 200, for example, before transmitting a new digital certificate to connected device 200, or before transmitting an updated digital certificate of the current digital certificate to connected device 200. Therefore, a random seed is assigned to connected device 200 before a new or updated digital certificate is obtained. With this, server 100 and connected device 200 store identical random seeds. In the example illustrated in FIG. 1, the random seed "0x12345..." is stored in each of server 100 and connected device 200.

Here, for example, when a vulnerability is found in the algorithm (cryptographic scheme) currently in use and the algorithm becomes unusable, connected device 200 transmits a request message to server 100. When server 100 obtains the request message, server 100 generates a key pair (a private key and a public key) based on the random seed stored in advance. Then, server 100 creates a digital certificate that is digitally signed using the private key included in the created key pair, and transmits the created digital certificate to connected device 200.

In contrast, connected device 200 generates a key pair based on the random seed stored in advance. Since this key pair is generated based on the same random seed shared by server 100 and connected device 200, and is therefore identical to the key pair generated by server 100. That is, connected device 200 can obtain, from server 100, a digital certificate for a private key to be used thereafter by obtaining the digital certificate transmitted from server 100, without transmitting the private key to server 100. As described above, communication system 10 (communication method) according to the embodiment provides the advantage of enabling creation or update of a digital certificate without transmitting a private key.

### [2. Configuration]

Next, an overall configuration including communication system 10 according to the embodiment will be described. As described above, the embodiment will be described assuming that communication system 10 includes server 100 and one connected device 200. Connected device 200 is implemented by an information terminal such as a personal computer, a smartphone, or a tablet terminal, for example. Furthermore, connected device 200 can communicate with server 100 via a network such as the Internet.

FIG. 2 is a block diagram illustrating an example of a functional configuration of server 100 according to the embodiment. Server 100 includes a processor and memory, and the functions of server 100 are implemented by the processor executing a program stored in the memory. As illustrated in FIG. 2, management server 100 includes random seed generator 101, random seed storage 102, key generator 103, and certificate creator 104, and communicator 105.

Random seed generator 101 generates a random seed to be stored in advance in each of server 100 and connected device 200. FIG. 3 is a diagram illustrating an example of a random seed. As illustrated in FIG. 3, random seed generator 101 generates a 16-bit random seed, for example. Random seed generator 101 generates a random seed by executing an appropriate generation algorithm, for example.

Random seed storage 102 stores the random seed generated by random seed generator 101.

Key generator 103 generates a key using a random seed stored in random seed storage 102 when obtaining a request message from connected device 200, i.e., obtaining a message requesting for creation or update of a digital certificate from connected device 200. In the embodiment, a key to be generated by key generator 103 is a key pair including a private key and a public key. In other words, key generator 103 generates a key including a private key and a public key by using the random seed stored in advance. Hereinafter, the key generated by key generator 103 of server 100 is also referred to as a "first key".

FIG. 4 is a diagram illustrating an example of a private key. As illustrated in FIG. 4, key generator 103 generates a private key having a bit string of 16 bits or more, for example. Furthermore, key generator 103 generates a public key having a bit string of 16 bits or more, for example. Key generator 103 generates a key (first key) by executing an appropriate encryption key generation algorithm, for example. Note that when key generator 103 obtains information regarding a cryptographic scheme to be used from connected device 200, key generator 103 may generate a key (first key) corresponding to the cryptographic scheme.

Certificate creator 104 creates a digital certificate for the key by using the key (first key) generated by key generator 103. FIG. 5 is a diagram illustrating an example of a digital certificate. As illustrated in FIG. 5, certificate creator 104 creates a digital certificate including an issuer, a cryptographic scheme to be used, a public key, and a signature, for example. In the example illustrated in FIG. 5, the issuer is server 100, the cryptographic scheme to be used is "Dilithium2", which is a post-quantum cryptographic scheme, the public key is the public key generated by key generator 103, and the signature is the signature generated by using the private key generated by key generator 103. As illustrated in FIG. 5, certificate creator 104 generates a signature having a bit string of 16 bits or more, for example. Certificate creator 104 creates a digital certificate by executing an appropriate certificate creation algorithm, for example.

Communicator 105 receives a request message transmitted from connected device 200. Furthermore, communicator 105 transmits the random seed generated by random seed generator 101 to connected device 200 that is the sender of the request message. Basically, the transmission of such a random seed to connected device 200 is performed only when the use of connected device 200 is started. Furthermore, communicator 105 transmits the digital certificate created by certificate creator 104 to connected device 200 that is the sender of the request message.

FIG. 6 is a block diagram illustrating an example of a functional configuration of connected device 200 according to the embodiment. Connected device 200 includes a processor and memory, and the functions of connected device 200 are implemented by the processor executing a program stored in the memory. As illustrated in FIG. 6, connected device 200 includes random seed storage 201, key generator 202, key storage 203, certificate updater 204, and certificate storage 205, and communicator 206.

Random seed storage 201 stores the random seed received by communicator 206 from server 100.

Key generator 202 generates a key by using a random seed stored in random seed storage 201 when transmitting a request message to server 100, i.e., creating or updating a digital certificate. In the embodiment, a key to be generated by key generator 202 is a key pair including a private key and a public key. Key generator 202 generates a key by executing an appropriate encryption key generation algorithm, for example. Hereinafter, the key generated by key generator 202 of connected device 200 is also referred to as a "second key".

Here, key generator 202 generates a key (second key) by using the random seed identical to the random seed to be used by server 100 and the same encryption key generation algorithm as the encryption key generation algorithm to be used by key generator 103 of server 100. Therefore, the key (second key) generated by key generator 202 is identical to the key (first key) generated by key generator 103 of server 100. In other words, key generator 202 generates a key (second key) that is identical to the key (first key) including a private key and a public key generated by server 100 using the random seed identical to the random seed to be used by server 100 and stored in advance.

Key storage 203 stores the key (second key) generated by key generator 202. For example, when a key is not stored, key storage 203 stores the key generated by key generator 202 as a new key. Furthermore, for example, when key storage 203 already stores a key, key storage 203 updates the key by overwriting the stored key with the key generated by key generator 202.

Certificate updater 204 transmits a request message to server 100 when update of the digital certificate is required. Here, when update of the digital certificate is required is, for example, when the digital certificate is expired or a vulnerability is found in the cryptographic scheme currently in use.

Certificate storage 205 stores the digital certificate received by communicator 206. For example, when a digital certificate is not stored, certificate storage 205 stores the digital certificate received by communicator 206 as a new digital certificate. Furthermore, for example, when certificate storage 205 already stores a digital certificate, certificate storage 205 updates the digital certificate by overwriting the stored digital certificate with the digital certificate received by communicator 206.

Communicator 206 transmits a request message to server 100. Furthermore, communicator 206 receives a digital certificate transmitted from server 100. In other words, communicator 206 receives a digital certificate for the key (first key) generated using the key by server 100 and transmitted from server 100.

### [3. Operations]

Operation examples of communication system 10 according to the embodiment will be described below.

### [3-1. First Operation Example]

FIG. 7 is a sequence diagram illustrating a first operation example of communication system 10 according to the embodiment. The first operation example is performed when use of connected device 200 is started, for example.

First, server 100 generates a random seed (S101). Server 100 then transmits the generated random seed to connected device 200 (S102). Furthermore, server 100 stores the generated random seed in random seed storage 102 (S103).

Upon receiving the random seed, connected device 200 stores the received random seed in random seed storage 201 (S104). Note that steps S103 and S104 may be performed in reverse order or in parallel. Accordingly, identical random seeds are stored in server 100 and connected device 200.

### [3-2. Second Operation Example]

FIG. 8 is a sequence diagram illustrating a second operation example of communication system 10 according to the embodiment. The second operation example is performed, for example, when connected device 200 has not yet requested server 100 to issue a digital certificate. Furthermore, the second operation example is performed, for example, when updating of the digital certificate becomes necessary, such as when a vulnerability is found in a cryptographic scheme currently in use.

First, connected device 200 transmits a request message to server 100 (S201).

Upon receiving the request message, server 100 generates a new key (first key) using the random seed stored in random seed storage 102 (S202). Next, server 100 creates a digital certificate for the key using the generated key (S203). Server 100 then transmits the created digital certificate to connected device 200 that is the sender of the request message (S204). Each of steps S202 to S204 is a process of the communication method according to the embodiment.

Connected device 200 generates a new key (second key) using the random seed stored in random seed storage 201 (S205). As already described above, since the key (second key) generated in step S205 is generated based on the same random seed shared by server 100 and connected device 200, the key (second key) is identical to the key (first key) generated by server 100. In other words, connected device 200 stores in advance a random seed identical to the random seed to be used in server 100 and generates a key (second key) identical to the key (first key) generated by server 100 using the random seed.

Then, upon receiving the digital certificate, connected device 200 updates the digital certificate and the key by storing the received digital certificate in certificate storage 205 and storing the generated key (second key) in key storage 203 (S206). Note that when connected device 200 receives a digital certificate for the first time, step S206 may be read as "storing the digital certificate and the key".

### [4. Advantages]

Advantages of communication system 10 (communication method) according to the embodiment will be described below. As described above, in communication system 10 (communication method) according to the embodiment, server 100 generates a key (first key) including a private key and a public key based on a random seed stored in advance. Then, server 100 creates a digital certificate for the generated key, and transmits the created digital certificate to connected device 200. In contrast, connected device 200 generates a key (second key) based on the random seed stored in advance. Since this key (second key) is generated based on the same random seed shared by server 100 and connected device 200, the key (second key) is identical to the key (first key) generated by server 100. Therefore, connected device 200 can obtain a digital certificate for a private key to be used thereafter from server 100 by obtaining the digital certificate transmitted from server 100 without transmitting the private key to server 100.

As described above, in communication system 10 (communication method) according to the embodiment, a key identical to the key generated by connected device 200 is generated using the random seed identical to the random seed to be used by connected device 200, and a digital certificate for the key generated in communication system 10 is created and transmitted to connected device 200. Therefore, connected device 200 can substantially obtain a digital certificate for the key generated by connected device 200. Therefore, communication system 10 (communication method) according to the embodiment provides the advantage of enabling creation or update of a digital certificate without transmitting a private key.

Therefore, communication system 10 (communication method) according to the embodiment provides the advantage of enabling creation or update of a digital certificate, for example, even when a vulnerability has been found in the cryptographic scheme currently in use and security of the communication is not guaranteed, or a private key is stored in a secure element in connected device 200 and cannot be extracted from connected device 200 to an external destination.

### [Other Embodiments]

Although the embodiment has been described above, the present disclosure is not limited to the above-described embodiment. Variations of the embodiment will be listed below. The variations listed below may be appropriately combined.

### <Variation 1>

In Variation 1, when transmitting a request message to server 100, connected device 200 further transmits information indicating a cryptographic scheme usable by connected device 200. Key generator 103 of server 100 then generates a usable key (first key) using the obtained cryptographic scheme. In other words, in communication system 10 (communication method) according to Variation 1, in the generating of the key (first key), the key is generated further based on the cryptographic scheme usable by connected device 200. This will be specifically described below.

FIG. 9 is a sequence diagram illustrating an operation example of communication system 10 according to Variation 1 of the embodiment. First, connected device 200 transmits a request message and information indicating a usable cryptographic scheme to server 100 (S207).

Upon receiving the request message and the information indicating a usable cryptographic scheme, server 100 generates a new key (first key) using the random seed stored in random seed storage 102 (S202). Here, server 100 generates a new key (first key) further based on the obtained usable cryptographic scheme. Subsequent steps S203 to S206 are the same as those of the second operation example of the embodiment, and therefore description thereof is omitted here. Note that in step S205, connected device 200 generates a new key (second key) further based on the usable cryptographic scheme.

As described above, in Variation 1, server 100 generates a key (first key) further based on the cryptographic scheme usable by connected device 200 and consequently creates a digital certificate. Therefore, this provides the advantage of enabling creation or update of a digital certificate corresponding to the cryptographic scheme usable by connected device 200.

Here, in Variation 1, the cryptographic scheme may be a post-quantum cryptographic scheme. In this case, deciphering of a key is more difficult compared with the case where encrypted communication is performed using classical cryptographic schemes. Therefore, this provides the advantage of enabling easy assurance of confidentiality of data to be transmitted or received using a key.

### <Variation 2>

FIG. 10 is a block diagram illustrating an example of a functional configuration of server 100' according to Variation 2 of the embodiment. Server 100' according to Variation 2 differs from server 100 according to the embodiment in that server 100' further includes cryptographic scheme information storage 106, as illustrated in FIG. 10.

Cryptographic scheme information storage 106 stores cryptographic scheme information. Cryptographic scheme information is information indicating security of cryptographic schemes. FIG. 11 is a diagram illustrating an example of the cryptographic scheme information. In the example illustrated in FIG. 11, the post-quantum cryptographic scheme "Dilithium" is secure, whereas the post-quantum cryptographic scheme "SIKE" has been found to be vulnerable.

Variation 2 differs from Variation 1 in that server 100' determines whether the obtained cryptographic scheme is secure or vulnerable, and when the cryptographic scheme is determined to be secure, server 100' generates a key (first key) and consequently creates a digital certificate. This will be specifically described below.

FIG. 12 is a sequence diagram illustrating an operation example of communication system 10 according to Variation 2 of the embodiment. First, connected device 200 transmits a request message and information indicating a usable cryptographic scheme to server 100' (S207), as with Variation 1.

Upon receiving the request message and the information indicating a usable cryptographic scheme, server 100' determines whether the obtained cryptographic scheme is secure by referring to the cryptographic scheme information stored in cryptographic scheme information storage 106 (S208). When server 100' determines that the cryptographic scheme is vulnerable (S208: No), server 100' does not perform steps S202 to S204 and consequently does not create a digital certificate. In this case, server 100' may transmit, to connected device 200, a message indicating that a digital certificate will not be created because the cryptographic scheme is vulnerable.

In contrast, when server 100' determines that the cryptographic scheme is secure (S208: Yes), server 100' performs steps S202 to S206 and consequently creates a digital certificate. Subsequent steps S202 to S206 are the same as those of the embodiment and Variation 1, and therefore description thereof is omitted here.

As described above, in Variation 2, server 100' generates a key (first key) and consequently creates a digital certificate when the cryptographic scheme is secure. Therefore, this provides the advantage of preventing creation of a digital certificate for the cryptographic scheme in which a vulnerability has been found.

### <Variation 3>

In Variation 3, when transmitting a request message to server 100, connected device 200 further transmits a device identifier (ID) that is the identifier of connected device 200. Key generator 103 of server 100 then generates a key (first key) using the random seed corresponding to the obtained device ID. This will be specifically described below.

FIG. 13 is a diagram illustrating an example of a random seed for each device ID. As illustrated in FIG. 13, in random seed storage 102 of server 100, a plurality of (in this case, two) random seeds are stored. In the example illustrated in FIG. 13, when the obtained device ID is "ID001", server 100 generates a key (first key) using the random seed "0x4EBFE...". Furthermore, when the obtained device ID is "ID002", server 100 generates a key (first key) using the random seed "0x41DEC...".

FIG. 14 is a sequence diagram illustrating an operation example of communication system 10 according to Variation 3 of the embodiment. First, connected device 200 transmits a request message and a device ID to server 100 (S209).

Upon receiving the request message and the device ID, server 100 reads a random seed corresponding to the device ID from random seed storage 102 (S210). Server 100 then generates a new key (first key) using the random seed that has been read (S202). Subsequent steps S203 to S206 are the same as those of the second operation example of the embodiment, and therefore description thereof is omitted here. Note that in step S205, connected device 200 generates a new key (second key) using the random seed identical to the random seed corresponding to the device ID that has been read by server 100.

As described above, in Variation 3, a key (first key) is generated using a random seed corresponding to the identifier of connected device 200 and consequently a digital certificate is created. Therefore, this provides the advantage of enabling creation of a unique digital certificate corresponding to each of connected devices 200.

### <Variation 4>

In Variation 4, server 100 determines whether a digital certificate needs to be updated. When a digital certificate is determined to require updating, key generator 103 of server 100 then generates a key (first key). This will be specifically described below.

Server 100 determines whether a digital certificate needs to be updated, for example, by referring to the expiration date of the digital certificate. Specifically, server 100 determines that a digital certificate needs to be updated when the digital certificate is expired.

Furthermore, server 100 determines whether a digital certificate needs to be updated, for example, by referring to the security of the cryptographic scheme currently in use. Specifically, when a vulnerability is found in the cryptographic scheme currently in use, server 100 determines that the digital certificate needs to be updated.

For example, server 100 obtains one or more document data items describing the cryptographic scheme, and performs appropriate natural language processing on the obtained one or more document data items to search for the description about the security of the cryptographic scheme. Then, when server 100 has found description indicating that the cryptographic scheme is vulnerable in the one or more document data items, server 100 may determine that the digital certificate needs to be updated.

Furthermore, for example, server 100 may determine whether a digital certificate needs to be updated, for example, by obtaining a determination result about the security of the cryptographic scheme currently in use that is transmitted from a third party other than communication system 10. The third party may be a device other than communication system 10, or may be a human. Note that server 100 may obtain the determination result by periodically querying a third party for the determination result.

FIG. 15 is a sequence diagram illustrating an operation example of communication system 10 according to Variation 4 of the embodiment. First, server 100 extracts a device ID of connected device 200 whose digital certificate needs to be updated (S211). In step S211, server 100 determines, for each of a plurality of connected devices 200, whether a digital certificate needs to be updated, and extracts a device ID of connected device 200 whose digital certificate is determined to require updating. Server 100 then generates a new key (first key) using a random seed (S202). In step S202, server 100 reads, from random seed storage 102, a random seed corresponding to the extracted device ID, and generates a new key (first key) using the read random seed. Subsequent steps S203 to S206 are the same as those of the second operation example of the embodiment, and therefore description thereof is omitted here.

As described above, in Variation 4, whether a digital certificate needs to be updated is determined, and when the digital certificate is determined to require updating, a key is generated and consequently a digital certificate is created. Therefore, this provides the advantage of eliminating the need for connected device 200 to request server 100 to update the digital certificate.

In Variation 4, server 100 determines whether a digital certificate needs to be updated, but the present disclosure is not limited to this. For example, connected device 200 may determine whether a digital certificate needs to be updated. In this case, when connected device 200 determines that the digital certificate needs to be updated, connected device 200 may transmit a request message to server 100.

### <Variation 5>

In connected device 200 according to Variation 5, a timing at which a key (second key) is generated using the random seed stored in advance differs from that of connected device 200 according to the embodiment. This will be specifically described below.

FIG. 16 is a sequence diagram illustrating an operation example of communication system 10 according to Variation 5 of the embodiment. As illustrated in FIG. 16, in Variation 5, connected device 200 generates a new key (second key) from a random seed before transmitting a request message to server 100 (S205). Note that connected device 200 may generate a new key (second key) using a random seed, for example, after transmitting a request message and before receiving a digital certificate transmitted from server 100.

### <Variation 6>

Server 100 according to Variation 6 differs from server 100 according to the embodiment in that server 100 according to Variation 6 obtains a usage count of a random seed in connected device 200 and performs an adjustment process that matches a usage count of the random seed in server 100 with the obtained usage count in connected device 200. This will be specifically described below.

Basically, the usage count of the random seed in server 100 matches the usage count of the random seed in connected device 200. Accordingly, a key (first key) generated by server 100 using the random seed and a key (second key) generated by connected device 200 using the random seed are generated based on identical random numbers, and thus are identical. Therefore, a digital certificate created for the key (first key) generated by server 100 is substantially a digital certificate for the key (second key).

However, for some reason, there may be cases where the usage count of the random seed in server 100 does not match the usage count of the random seed in connected device 200. In this case, the random number generated using the random seed by server 100 differs from the random number generated using the random seed by connected device 200, and therefore server 100 and connected device 200 cannot generate identical keys. Then, in this case, a digital certificate created for the key (first key) generated by server 100 does not become a digital certificate for the key (second key), and there may arise a problem that the created digital certificate becomes invalid.

In view of this, in Variation 6, the above-described problem is addressed by performing an adjustment process that matches the usage count of the random seed in server 100 with the usage count of the random seed in connected device 200. Specifically, server 100 obtains, for example, a device ID and a usage count of a random seed from connected device 200, and stores the obtained device ID and usage count in memory or the like. FIG. 17 is a diagram illustrating an example of a usage count for each device ID.

Then, before generating a new key (first key) using the random seed, server 100 reads the usage count of the random seed corresponding to the device ID of connected device 200 whose digital certificate is to be created, and performs an adjustment process to match the usage count of the random seed with a usage count of the random seed in server 100.

Specifically, when the usage count of the random seed in server 100 is less than the usage count of the random seed in connected device 200, server 100 generates one or more random numbers using the random seed so that the usage count of the random seed in server 100 becomes the same as the usage count of the random seed in connected device 200, and discards the generated one or more random numbers. In contrast, when the usage count of the random seed in server 100 is greater than the usage count of the random seed in connected device 200, server 100 transmits data indicating a difference in usage count to connected device 200, and instructs connected device 200 to adjust the usage count of the random seed. Then, in accordance with the instruction, connected device 200 generates one or more random numbers using the random seed for the number of times corresponding to the difference in usage count, and discards the generated one or more random numbers.

FIG. 18 is a schematic diagram illustrating operations by communication system 10 according to Variation 6 of the embodiment. In FIG. 18, (a) indicates the usage count of the random seed in each of server 100 and connected device 200 before the adjustment process is performed, and (b) in FIG. 18 indicates the usage count of the random seed in each of server 100 and connected device 200 after the adjustment process is performed. In the example illustrated in (a) in FIG. 18, the usage count of the random seed in server 100 is five, whereas the usage count of the random seed in connected device 200 is three. Therefore, server 100 transmits data indicating the difference in usage count (here, two uses) to connected device 200, and instructs connected device 200 to adjust the usage count of the random seed. Then, in accordance with the instruction, connected device 200 generates one or more random numbers using the random seed for the number of times corresponding to the difference in usage count, and discards the generated one or more random numbers. As a result, both the usage count of the random seed in server 100 and the usage count of the random seed in connected device 200 become five and thus match each other.

FIG. 19 is a sequence diagram illustrating an operation example of communication system 10 according to Variation 6 of the embodiment. The example illustrated in FIG. 19 will be described under the assumption that server 100 has already received a request message and a device ID from connected device 200. First, connected device 200 transmits data indicating the usage count of the random seed to server 100 (S301).

Upon receiving the data indicating the usage count of the random seed, server 100 determines whether the usage count of the random seed in server 100 is the same as the usage count of the random seed in connected device 200 (S302). When the usage count of the random seed in server 100 is the same as the usage count of the random seed in connected device 200 (S302: Yes), server 100 does not perform steps S303 to S306, which will be described below.

In contrast, when the usage count of the random seed in server 100 does not match the usage count of the random seed in connected device 200 (S302: No), server 100 next determines whether the usage count of the random seed in server 100 is lower (S303). When the usage count of the random seed in server 100 is lower (S303: Yes), server 100 generates one or more random numbers using the random seed so that the usage count of the random seed in server 100 becomes the same as the usage count of the random seed in connected device 200, and discards the generated one or more random numbers (S305).

In contrast, when the usage count of the random seed in connected device 200 is lower (S303: No), server 100 transmits data indicating the difference in usage count to connected device 200, and instructs connected device 200 to adjust the usage count of the random seed (S304).

Upon receiving the data, connected device 200 generates one or more random numbers using the random seed for the number of times corresponding to the difference in usage count in accordance with the instruction, and discards the generated one or more random numbers (S306).

As described above, in Variation 6, since the usage count of the random seed in server 100 is matched with the usage count of the random seed in connected device 200, the random number generated using the random seed by server 100 becomes identical to the random number generated using the random seed by connected device 200. Therefore, in Variation 6, server 100 and connected device 200 can always generate identical keys, and thus this provides the advantage of reducing the likelihood that a digital certificate created by server 100 becomes invalid.

Note that, when server 100 stores a usage count of a random seed for each device ID in memory or the like, server 100 may further store the cryptographic scheme used by connected device 200 in the memory or the like. FIG. 20 is a diagram illustrating an example of a usage count of a random seed and one or more cryptographic schemes for each device ID.

Furthermore, server 100 may store, for each device ID, a total bit size of random numbers generated using the random seed in memory or the like, instead of storing a usage count of the random seed. FIG. 21 is a diagram illustrating an example of a bit size of a random seed for each device ID. In this case, server 100 may perform the adjustment process so that the total bit size of the random number generated by server 100 match the total bit size of the random number generated by connected device 200.

Furthermore, server 100 may perform the above adjustment process periodically or each time server 100 receives a request message from connected device 200.

### <Other Variations>

In the above-described embodiment, connected device 200 receives a random seed generated by server 100 from server 100 to store the random seed, but the present disclosure is not limited to this. For example, connected device 200 may store a random seed identical to the random seed used by server 100 by obtaining a random seed from an external storage medium such as a Universal Serial Bus (USB) or a device different from server 100. Furthermore, for example, connected device 200 may store the random seed identical to the random seed used by server 100 by having the random seed written to connected device 200 when connected device 200 is manufactured at a factory or the like.

Furthermore, in the above-described embodiment, a process to be performed by a specific processing unit may be performed by another processing unit. Furthermore, the order of a plurality of processes may be changed, or a plurality of processes may be performed in parallel.

In addition, each of the elements in the above-described embodiment may be implemented by executing a software program suitable for the element. Each of the elements may be implemented by a program executing unit, such as a Central Processing Unit (CPU) or a processor, reading and executing the software program recorded on a recording medium such as a hard disk or semiconductor memory.

Furthermore, each of the elements may be implemented by hardware. For example, each of the elements may be a circuit (or an integrated circuit). These circuits may constitute a single circuit as a whole or may be separate circuits. Furthermore, these circuits may each be a general-purpose circuit or a dedicated circuit.

Furthermore, these general or specific aspects of the present disclosure may be implemented using a device, a method, an integrated circuit, a computer program, or a computer-readable recording medium such as a CD-ROM. Furthermore, these general or specific aspects may be implemented using any combination of devices, methods, integrated circuits, computer programs, and recording media.

For example, the present disclosure may be implemented as a communication method to be executed by a computer, or a program for causing a computer to execute the communication method. The present disclosure may be implemented as a non-transitory computer-readable recording medium having recorded thereon such a program.

Embodiments obtained by making various modifications to each of the embodiments that can be conceived by those skilled in the art, or embodiments obtained by combining elements and functions in different embodiments in any manner, without materially departing from the spirit of the present disclosure, may be included in the scope of the present disclosure.

### [Industrial Applicability]

The present disclosure is useful when a digital certificate is created or updated.

### [Reference Signs List]

- 10: communication system
- 100, 100': server
- 101: random seed generator
- 102: random seed storage
- 103: key generator
- 104: certificate creator
- 105: communicator
- 106: cryptographic scheme information storage
- 200: connected device
- 201: random seed storage
- 202: key generator
- 203: key storage
- 204: certificate updater
- 205: certificate storage
- 206: communicator
- 300: another connected device

## Claims

1. A communication method comprising:
generating a key including a private key and a public key using a random seed stored in advance;
creating, using the key generated, a digital certificate for the key; and
transmitting the digital certificate created to a connected device, the connected device storing in advance a random seed identical to the random seed and generating, using the random seed stored in the connected device, a key identical to the key generated.

2. The communication method according to claim 1, wherein
in the generating of the key, the key is generated further based on a cryptographic scheme usable by the connected device.

3. The communication method according to claim 2, wherein
the cryptographic scheme is a post-quantum cryptographic scheme.

4. The communication method according to claim 2, comprising:
determining whether the cryptographic scheme is secure or vulnerable, wherein
in the generating of the key, the key is generated when the cryptographic scheme is determined to be secure.

5. The communication method according to any one of claims 1 to 4, further comprising:
obtaining an identifier of the connected device, wherein
in the generating of the key, the key is generated using the random seed corresponding to the identifier obtained.

6. The communication method according to any one of claims 1 to 4, comprising:
determining whether the digital certificate needs to be updated, wherein
in the generating of the key, the key is generated when the digital certificate is determined to require updating.

7. The communication method according to any one of claims 1 to 4, comprising:
obtaining a usage count of the random seed in the connected device; and
matching a usage count of the random seed used in the generating of the key with the usage count of the random seed in the connected device that has been obtained.

8. A communication system comprising:
a server; and
a connected device that communicates with the server, wherein
the server includes:
a key generator that generates a key including a private key and a public key using a random seed stored in advance;
a certificate creator that creates, using the key generated by the key generator, a digital certificate for the key; and
a communicator that transmits the digital certificate created by the certificate creator to the connected device, and
the connected device includes:
a communicator that receives the digital certificate transmitted from the server; and
a key generator that generates, using a random seed identical to the random seed stored in advance, a key identical to the key generated by the key generator of the server.

9. A server comprising:
a key generator that generates a key including a private key and a public key using a random seed stored in advance;
a certificate creator that creates, using the key generated by the key generator, a digital certificate for the key; and
a communicator that transmits the digital certificate created by the certificate creator to a connected device, the connected device storing in advance a random seed identical to the random seed and generating, using the random seed stored in the connected device, a key identical to the key generated by the key generator.

10. A connected device that communicates with a server, the connected device comprising:
a key generator that generates a key identical to a key including a private key and a public key generated by the server by using a random seed identical to a random seed stored in advance and to be used by the server; and
a communicator that receives a digital certificate for the key generated by the server, the digital certificate being created by the server using the key generated by the server and being transmitted from the server.
